# EUROPEAN PATENT SPECIFICATION

(11) **EP 3 309 797 B1**
(45) Date of publication and mention of the grant of the patent: **11.03.2020**
(21) Application number: 16853402.2
(22) Date of filing: 16.09.2016
(51) Int. Cl.: H01B 1/08, C04B 35/01, C04B 35/626, H01M 8/1246, C04B 35/44, C04B 35/053

(54) **SOLID ELECTROLYTE**
FESTELEKTROLYT
ÉLECTROLYTE SOLIDE

(30) Priority: 08.10.2015 JP 2015200534
(43) Date of publication of application: 18.04.2018
(73) Proprietor: Kabushiki Kaisha Toyota Chuo Kenkyusho, Nagakute-shi, Aichi 480-1192 (JP)
(72) Inventor: FUJITA, Satoru, Nagakute-shi Aichi 480-1192 (JP); UYAMA, Takeshi, Nagakute-shi Aichi 480-1192 (JP)
(74) Representative: Kramer Barske Schmidtchen Patentanwälte PartG mbB
(86) International application number: PCT/JP2016/077362
(87) International publication number: WO 2017/061248

(56) References cited:
- JP-A- 2000 251 534
- JP-A- 2005 019 306
- JP-A- 2005 216 760
- JP-A- 2015 171 984
- US-A1- 2004 001 995
- BEIBEI LIU ET AL: "Ga site doping and concentration variation effects on the conductivities of melilite-type lanthanum strontium gallate electrolytes", INTERNATIONAL JOURNAL OF HYDROGEN ENERGY, ELSEVIER SCIENCE PUBLISHERS B.V., BARKING, GB, vol. 37, no. 1, 17 March 2011 (2011-03-17) , pages 961-966, XP028348562, ISSN: 0360-3199, DOI: 10.1016/J.IJHYDENE.2011.03.093 [retrieved on 2011-03-23]
- BEIBEI LIU ET AL: "Synthesis and electrical conductivity of various melilite-type electrolytes LnSrGaO", SOLID STATE IONICS, NORTH HOLLAND PUB. COMPANY. AMSTERDAM; NL, NL, vol. 191, no. 1, 14 April 2011 (2011-04-14), pages 68-72, XP028210417, ISSN: 0167-2738, DOI: 10.1016/J.SSI.2011.04.005 [retrieved on 2011-04-21]
- TEALDI CRISTINA ET AL.: 'Layered LaSrGa3O7-Based Oxide-Ion Conductors: Cooperative Transport Mechanisms and Flexible Structures' ADVANCED FUNCTIONAL MATERIALS vol. 20, no. 22, 27 August 2010, pages 3874 - 3880, XP001558808
- KUANG XIAOJUN ET AL.: 'Interstitial oxide ion conductivity in the layered tetrahedral network melilite structure' NATURE MATERIALS vol. 7, no. 6, 18 May 2008, pages 498 - 504, XP055375793

## Description

### FIELD OF THE INVENTION

The present invention relates to a solid electrolyte, more specifically to a solid electrolyte including an oxide having a melilite structure.

### BACKGROUND OF THE INVENTION

A fuel cell is one of means effective for solving environmental problems and energy problems. In particular, a solid-oxide fuel cell (SOFC) has the advantages of (1) having high power generation efficiency, (2) being compatible with various types of fuels, (3) having wide adaptability ranging from a small distributed power source to a large scale system substituting thermal power plants, and (4) not requiring a Pt catalyst.

The reduction of an operating temperature (current operating temperature: 750°C), however, is the key to the promotion of an SOFC. By reducing a temperature (for example, to 600°C), (1) improvement in durability of a cell (chemical stability), (2) use of a less-expensive housing (less-expensive stainless steel), and (3) reduction of start and stop time can be attained.

A conventional SOFC is operated at 750°C and yttria-stabilized zirconia (YSZ) is used as an electrolyte. The crystal structure of YSZ is a fluorite-type structure and is a crystal structure of high symmetry. An oxygen ion in YSZ therefore moves in three-dimensional directions by vacancy diffusion. YSZ, however, cannot attain a conductivity of 0.01 S/cm or more unless the temperature is 700°C or more.

In contrast, a solid electrolyte including an oxide having a melilite structure (melilite electrolyte) has a crystal structure of low symmetry and shows a high ion conductivity in a specific direction. For this reason, a melilite electrolyte is studied as an electrolyte for an SOFC operating at a low temperature.

As melilite electrolytes, known examples include
(1) LaSrGa₃O₇ (Non-patent Literature 1),
(2) La_{1.54}Sr_{0.46}Ga₃O_{7.27} (Non-patent Literature 2),
(3) La_{1.64}Ca₃O_{7.3} (Non-patent Literature 3)
(4) La_{1.5}Ca_{0.5}Ga₃O_{7.25} (Non-patent Literature 4), and
(5) (A₁₊ₓB₁₋ₓ)GaGa₂O_{7+x/2} (here, 0 ≤ x ≤ 0.5; A = La, Nd; B = Ca, Sr) (Non-patent Literature 5).

The conductivities at 600°C of most of the melilite electrolytes exceed the conductivity of YSZ. In particular, the conductivity at 600°C of La_{1.54}Sr_{0.46}Ga₃O_{7.27} exceeds 0.01 S/cm. In order to lower the operating temperature of an SOFC, however, it is desired to further improve a conductivity at a low temperature.

Furthermore, US 2004/0001995 A1 discloses a lanthanum gallate-based sintered body, comprising: a base material formed of lanthanum gallate-based oxide, wherein grains having a K₂NiF₄ structure and/or grains having a layered perovskite structure are dispersed into the base material.

### [Citation List]

### [Non-patent Literature]

[Non-patent Literature 1] Adv. Funct. Mater., 2010, 20, 3874-3880
[Non-patent Literature 2] Nat. Mater., 2008, 7, 498
[Non-patent Literature 3] Agew. Chem. Int. Ed., 2010, 49, 2362-2366
[Non-patent Literature 4] J. Mater. Chem. A, 2015, 3, 3091-2366
[Non-patent Literature 5] J. Am. Chem. Soc., 2011, 133, 15200-15211

### SUMMARY OF THE INVENTION

The problem to be solved by the present invention is to provide a novel solid electrolyte having a conductivity larger than YSZ at 600°C.

In order to solve the problem, a solid electrolyte according to the present invention is characterized by having a melilite structure and a composition represented by the following expression (1);

La_{2-y}M_{y}X_{3-z}Mg_{z}O_{7+α} ··· (1),

where
M represents an alkaline earth metal element other than Mg,
X represents a trivalent metal element,
0 < y < 2, 0 < z < 3, and
α represents a value retaining electrical neutrality.

In a melilite electrolyte containing La and a trivalent metal element (X), a conductivity at a low temperature improves by substituting a part of La with an element M and optimizing an La/M ratio. This is presumably because the quantity of oxygen ions (O(4) ions) acting as a carrier in the oxygen ions increases in a crystal structure.

Further, the conductivity at a low temperature improves more by substituting a part of the element X with Mg. This is presumably because the oxygen ions acting as the carrier go into the state of being more likely to move in a lattice by doping Mg that has an electronegativity difference from oxygen larger and a valence smaller than the element X.

### BRIEF DESCRIPTION OF THE DRAWINGS

Fig. 1 is a schematic view of a crystal structure of a melilite electrolyte containing Sr as an element M and Ga as an element X.
Fig. 2 is an XRD pattern of La_{1.35}Sr_{0.65}Ga_{2.96}Mg_{0.04}O_{7.26}.
Fig. 3 is an XRD pattern of La_{1.33}Sr_{0.67}Ga₃O_{7.1}.
Fig. 4 is an XRD pattern of La_{1.54}Sr_{0.46}Ga_{2.87}Mg_{0.13}O_{7.21}.
Fig. 5 is an XRD pattern of La_{1.54}Sr_{0.46}Ga₃O_{7.27}.
Fig. 6 is a graph showing the temperature dependence of conductivity in melilite electrolytes and a YSZ.

### DETAILED DESCRIPTION OF THE PREFERRED EMBODIMENT

An embodiment according to the present invention is explained in detail hereunder.

### [1. Solid electrolyte]

A solid electrolyte according to the present invention has a melilite structure and a composition represented by the following expression (1);

La_{2-y}M_{y}X_{3-z}Mg_{z}O_{7+α} ··· (1),

where
M represents an alkaline earth metal element other than Mg,
X represents a trivalent metal element,
0 < y < 2, 0 < z < 3, and
α represents a value retaining electrical neutrality.

### [1.1. Melilite structure]

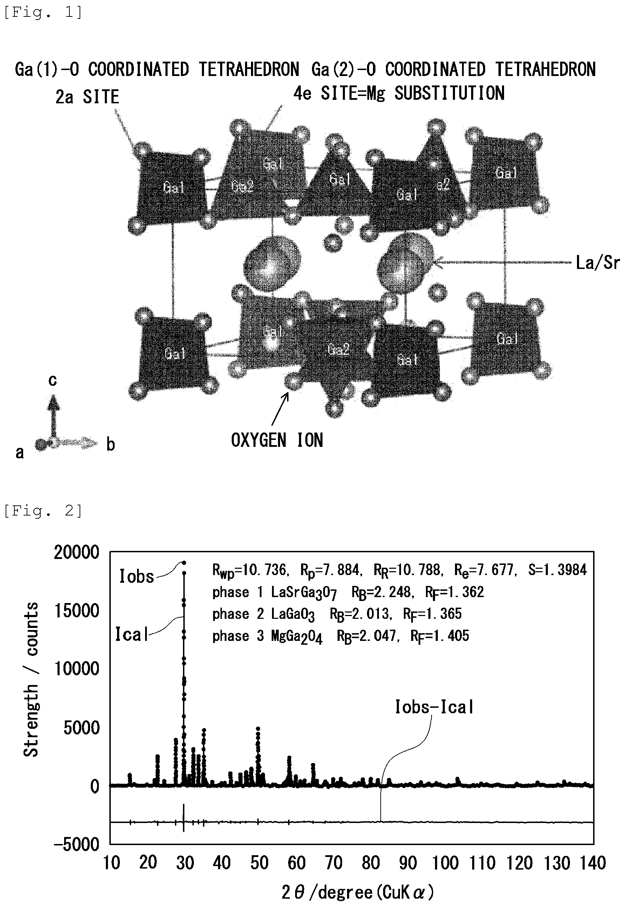

Fig. 1 shows a schematic view of a crystal structure of a melilite electrolyte containing Sr as an element M and Ga as an element X. A melilite electrolyte has: a Ga-O layer (X-O layer) formed by two-dimensionally linking Ga-O coordinated tetrahedrons (X-O coordinated tetrahedrons); and La and Sr (element M) inserted between the Ga-O layers. A Ga atom is located in the center of a Ga-O coordinated tetrahedron and an oxygen atom is located at an apex thereof. In the melilite electrolyte shown in Fig. 1, oxygen ions are likely to diffuse along a Ga-O layer. As a result, an ion conductivity in a direction parallel with a Ga-O layer is larger than that in a vertical direction.

A Ga-O layer has a structure in which two different types of Ga-O coordinated tetrahedrons share an apex. A Ga(1) links with four O (3) s and all the oxygen ions at the apexes are shared with a Ga(2)-O coordinated tetrahedron. Further, a Ga(2)-O coordinated tetrahedron links with one O(1), one O(2), and two O(3)s. The O(3)s at the apexes are shared with a Ga(1)-O coordinated tetrahedron and the O(1) at the apexes are shared between Ga(2)-O coordinated tetrahedrons. The 0(2) at the apex is not shared with a Ga(1)-O coordinated tetrahedron and exists in the state of a non-bridging oxygen.

An O(4) is an interstitial oxygen existing in a Ga-O layer and acts as an ion conduction source. An O(4) quantity depends on an La/Sr ratio. That is, as an La/Sr ratio increases, an O(4) quantity increases and an ion conductivity also increases . The same is applied to an element M other than Sr and, as a trivalent La quantity increases in comparison with a divalent element M, an oxygen (0(4)) quantity in a lattice increases. The reason why an La/Sr ratio is changeable is that the ion radii of La and Sr are 1.13 Å (0.113 nm) and 1.21 Å (0.121 nm) respectively, the electronegativities (Allred-Rochow electronegativities) of them are 1.08 and 0.99 respectively, and thus the values of the ion radii and the electronegativities are nearly identical.

According to Rietveld analysis result, Mg substitutes not for a Ga(1) site but for a Ga(2) site. The center of a Ga(1)-O coordinated tetrahedron is a 2a site and the 2a site is occupied only by Ga(1) (element X(1)). That is, Ga(1) is not substituted with Mg.

In contrast, the center of a Ga(2)-O coordinated tetrahedron is a 4e site and the 4e site is occupied by Ga(2) (element X(2)) and Mg. Ga(2) and Mg can occupy the 4e site at an arbitrary ratio.

An interlayer site is an La site and the La site is occupied by La and Sr (element M). La and Sr (element M) can occupy the La site at an arbitrary ratio.

### [1.2. Element M]

An element M represents an alkaline earth metal element (Be, Ca, Sr, Ba, or Ra) other than Mg. A melilite electrolyte may contain one kind of element M, or two or more kinds of elements M.

A melilite electrolyte containing an element M shows a high ion conductivity. This is because an 0(4) quantity increases by substituting a part of La with an element M.

In particular, a melilite electrolyte containing Sr as an element M shows a high ion conductivity. This is because the ion radius and electronegativity of Sr are close to those of La and an La/M ratio can be optimized easily.

Meanwhile, Mg is an alkaline earth metal element but never occupies an La site. This is thought to be related with ion radius and electronegativity.

### [1.3. Element X]

An element X represents a trivalent metal element. As an element X for example, Ga, Al, In, or the like is named. A melilite electrolyte may contain one kind of element X, or two or more kinds of elements X.

A melilite electrolyte containing an element X shows a high ion conductivity. This is presumably because an oxygen ion (O (4) ion) acting as a carrier is likely to move in a lattice in a melilite electrolyte containing an element X.

In particular, a melilite electrolyte containing Ga and/or Al as an element X shows a high ion conductivity. Meanwhile, the ionic bond of Al-O is stronger than that of Ga-O and hence an Al-contained melilite may show a higher ion conductivity than a Ga-contained melilite.

### [1.4. y]

y represents the proportion of an element M occupying an La site. y can take a value in the range of 0 < y < 2 as long as a melilite crystal structure can be retained.

A ratio of La to an element M (La/M ratio) influences the ion conductivity of a melilite electrolyte. In general, as an La/M ratio increases, an ion conductivity increases. In order to obtain an ion conductivity of 0.01 S/cm or more at 600°C, an La/M ratio (=(2-y)/y) is desirably 1.9 or more. An La/M ratio is more desirably 2.3 or more and yet more desirably 2.5 or more.

In contrast, when an La/M ratio is excessive, an ion conductivity rather decreases. Consequently, an La/M ratio is desirably 4.0 or less. An La/M ratio is more desirably 3.5 or less.

### [1.5. z]

z represents a quantity of doped Mg. z can take a value in the range of 0 < z < 3 as long as a melilite structure can be retained.

In general, as an Mg quantity increases, an oxygen ion is more likely to move and an ion conductivity increases. In order to attain such an effect, z is desirably more than zero. Z is more desirably 0.02 or more and yet more desirably 0.03 or more.

The upper limit of a doped Mg quantity depends on an La/M ratio. In general, as an La/M ratio increases, the quantity of Mg that can be doped decreases. The excessively added Mg disperses as MgO in a melilite electrolyte and causes an ion conductivity to lower. Consequently, z is desirably 0.20 or less. z is more desirably 0.15 or less.

### [1.6. α]

α represents a value retaining electrical neutrality of a melilite electrolyte, α is almost determined by the proportion of cations contained in a melilite electrolyte as long as material synthesis is not carried out under an extreme reducing atmosphere.

α is represented formally by (1-y-z)/2. Actually, however, α may vary somewhat from a theoretical value because of the formation of an oxygen vacancy and the like.

### [2. Manufacturing method of solid electrolyte]

A solid electrolyte according to the present invention can be manufactured by
(a) blending raw materials so that the quantities of metal elements may take a predetermined ratio,
(b) generating an intended crystal phase by subjecting mixed powder to solid-phase reaction (calcination),
(c) molding calcined powder, and
(d) sintering a molded body under an oxidizing atmosphere.

The conditions at the respective processes are not particularly limited and desirably optimum conditions are selected in accordance with the composition of a solid electrolyte.

### [3. Effect]

A melilite electrolyte containing La and a trivalent metal element (X) has a crystal structure of low symmetry and an anisotropic ion conductivity. In such a melilite electrolyte, when a part of La is substituted with an element M and an La/M ratio is optimized, a conductivity at a low temperature improves. This is presumably because the quantity of oxygen ions (0(4) ions) acting as a carrier in the oxygen ions increases in a crystal structure.

Further, when a part of the element X is substituted with Mg, a conductivity at a low temperature improves further. When a composition is optimized, a conductivity at 600°C becomes more than about ten times (0.02 S/cm) greater than that of a conventional electrolyte (YSZ). The possible reasons are as follows.

That is, whereas the difference in electronegativity between Ga and oxygen is 1.68, the difference in electronegativity between Mg and oxygen is 2.27. When Mg having a difference in electronegativity from oxygen larger than an element X is doped therefore, the ion bonding property of a melilite electrolyte increases.

Further, whereas an element X is trivalent, Mg is divalent. When Mg having a valence smaller than an element X is doped therefore, the quantity of oxygen vacancies increases in a melilite electrolyte.

As a result, oxygen ions acting as a carrier are thought to be in the state of being more likely to move in a lattice by those effects.

### [Example]

### (Examples 1 and 2, Comparative examples 1 and 2)

### [1. Manufacturing of sample]

### [1.1. Mixing and calcination of raw material]

Strontium carbonate, lanthanum oxide, gallium oxide, and magnesium oxide are used as the raw materials. The raw materials are weighed so that the composition may be La_{2-y}Sr_{y}Ga_{3-z}Mg_{z}O_{7+α} (y = 0.7 to 0.46, z = 0 to 0.13) . The raw materials are put into a pot of 500 cc containing zirconia balls of 2 mm in diameter and further ethanol of 250 cc is put into the pot. The materials are stirred, pulverized, and mixed for 15 hours by a ball mill method.

After mixing, ethanol distillation and powder dry are applied at 80°C for 15 hours. Successively, the mixture of the balls and the dried powder is sieved (60 meshes) and the mixed powder is separated.

The mixed powder is put into a crucible and calcined at 1,300°C for 15 hours in the atmosphere in a heating furnace. Further, the sample after calcined is sieved (60 meshes). The sieved calcined sample of 10 g and ethanol (250 cc) are put into a pot of 500 cc containing zirconia balls of 2 mm in diameter and pulverized for 15 hours by a ball mill method.

After the pulverization, ethanol distillation and powder dry are applied at 80°C for 15 hours. Successively, the mixture of the balls and the calcined powder is sieved (60 meshes) and the calcined powder is separated.

Successively, 5% PVA (Poly Vinyl Alcohol) of 4g as an additive and ethanol of 4 g as a solvent are added to the calcined powder of 10 g and they are mixed and left at room temperature for 24 hours. Successively, they are dried for 15 hours in a dryer (80°C).

### [1.2. Manufacturing of electrolyte membrane (manufacturing of sintered body)]

The additive-added calcined powder of 1.5 g is put into a tablet shaper of 2 cm in diameter and a pellet of 2 cm in diameter is manufactured by hydraulic press (press pressure: 26 kN). The pellet of 2 cm in diameter is reacted at 1, 400°C for 50 hours in the atmosphere in a heating furnace and a sintered body of 1.7 cm in diameter (thickness: 1 mm) is obtained.

### [2. Test method]

### [2.1. X-ray diffraction]

An obtained sintered body is subjected to X-ray diffraction. Further, a crystal structure is analyzed by Rietveld analysis.

### [2.2. Conductivity measurement]

Platinum electrodes are attached to the top and bottom faces of a sintered body and a conductance between two terminals in the membrane thickness direction is evaluated by using an LCR meter. The measurement is carried out up to the maximum temperature of 800°C under the atmosphere.

### [4. Result]

### [4.1. X-ray diffraction]

Fig. 2 shows an XRD pattern of La_{1.35}Sr_{0.65}Ga_{2.96}Mg_{0.04}O_{7.26} (Example 1). Further, Table 1 shows the Rietveld analysis result.

**[Table 1]**

| | | | | | | | |
|---|---|---|---|---|---|---|---|
| Space group: | | | P-42₁m | | | | |
| Crystal system: | | | tetragonal | | | | |
| Chemical composition: | | | La_{1.35}Sr_{0.65}Ga_{2.96}Mg_{0.04}O_{7.26}(Z=2) | | | | |
| Lattice constant: | | | a=8.04750(4)Å, c=5.008929(2)Å | | | | |

| Atom | Site | x | y | z | Occ. | B | BVS |
|---|---|---|---|---|---|---|---|
| La/Sr | 4e | 0.16368(5) | x+0.5 | 0.5091(2) | 0.676(5)/0.324 | 0.29 | 2.62/2.27 |
| Ga1 | 2a | 0 | 0 | 0 | 1 | 0.28 | 3.00 |
| Ga2/Mg | 4e | 0.64220(9) | x+0.5 | 0.9668(3) | 0.982(4)/0.018 | Ga1 | 2.72/2.46 |
| O1 | 2c | 0 | 0.5 | 0.20617 | 1 | 1.02 | 2.32 |
| O2 | 4e | 0.63321 | x+0.5 | 0.32126 | 1 | O1 | 1.74 |
| O3 | 8f | 0.0838 | 0.16258 | 0.20754 | 1 | O1 | 1.94 |
| O4 | 4e | 0.3161 | x+0.5 | 0.63786 | 0.079 | O1 | 2.11 |
| R_{wp}=10.736. Rₚ=7.884, R_{R}=10.788, Rₑ=7677, S=1.3984 | | | | | Mass fraction: | | |
| phase 1 LaSrGa₃O₇ R_{B}=2.248, R_{F}=1.362 | | | | | phase 1 LaSrGaO₇ 0.85 | | |
| phase 2 LaGaO₃ R_{B}=2.013, R_{F}=1.365 | | | | | phase 2 LaGaO₃ 0.13 | | |
| phase 3 MgGa₂O₄ R_{B}=2.047, R_{F}=1.405 | | | | | phase 3 MgGa₂O₄ 0.02 | | |

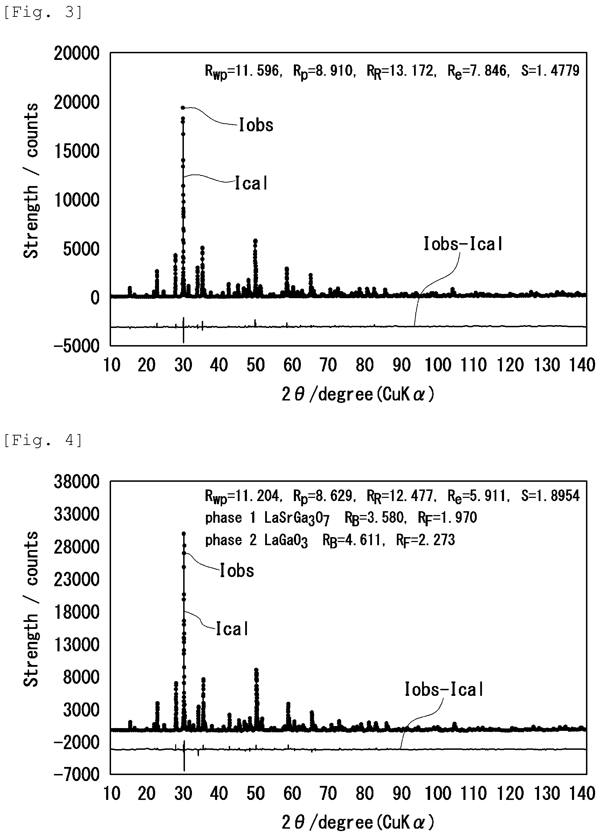

Fig. 3 shows an XRD pattern of La_{1.33}Sr_{0.67}Ga₃O_{7.1} (Comparative example 1). Further, Table 2 shows the Rietveld analysis result.

**[Table 2]**

| | | | | | | | |
|---|---|---|---|---|---|---|---|
| Space group: | | | P-42₁ m | | | | |
| Crystal system: | | | tetragonal | | | | |
| Chemical composition: | | | La_{1.33}Sr_{0.67}Ga₃O_{7.1} (Z=2) | | | | |
| Lattice constant: | | | a=8.04676(4) Å. c=5.28300(2) Å | | | | |

| Atom | Site | x | y | z | Occ. | B | BVS |
|---|---|---|---|---|---|---|---|
| La/Sr | 4e | 0.16434(8) | x+0.5 | 0.5093(3) | 0.666(8)/0.334 | 0.23(2) | 2.61/2.25 |
| Ga1 | 2a | 0 | 0 | 0 | 1 | 0.58(4) | 3.20 |
| Ga2 | 4e | 0.6415(1) | x+0.5 | 0.9644(4) | 1 | Ga1 | 2.67 |
| O1 | 2c | 0 | 0.5 | 0.21175 | 1 | 1.0(1) | 2.35 |
| O2 | 4e | 0.62785 | x+0.5 | 0.32557 | 1 | O1 | 1.71 |
| O3 | 8f | 0.07705 | 0.1636 | 0.20445 | 1 | O1 | 1.96 |
| O4 | 4e | 0.3323 | x+0.5 | 0.65209 | 0.0831 | O1 | 1.81 |

| | | | | | | | |
|---|---|---|---|---|---|---|---|
| R_{wp}=11.596, Rₚ=8.910, P_{R}=13.172, Rₑ=7.846, S=1.4779 | | | | | | | |

Fig. 4 shows an XRD pattern of La_{1.54}Sr_{0.46}Ga_{2.87}Mg_{0.13}O_{7.21} (Example 2). Further, Table 3 shows the Rietveld analysis result.

**[Table 3]**

| | | | | | | |
|---|---|---|---|---|---|---|
| Space group: | | | P-42₁m | | | |
| Crystal system: | | | tetragonal | | | |
| Chemical composition: | | | La_{1.54}Sr_{0.46}(3a_{2.87}Mg_{0.13}O_{7.21}(Z=2) | | | |
| Lattice constant: | | | a=8.04526(3)Å, c=5.27942(3)Å | | | |

| Atom | Site | x | y | z | Occ. | B |
|---|---|---|---|---|---|---|
| La/Sr | 4e | 0.16399(5) | x+0.5 | 0.5099(2) | 0.77/0.23 | 0.28(1) |
| Ga1 | 2a | 0 | 0 | 0 | 1 | 0.32(2) |
| Ga2/Mg | 4e | 0.6415(1) | x+0.5 | 0.9669(3) | 0.937(4)/0.063 | Ga1 |
| O1 | 2c | 0 | 0.5 | 0.20617 | 1 | 1.04 |
| O2 | 4e | 0.63321 | x+0.5 | 0.32126 | 1 | O1 |
| O3 | 8f | 0.08388 | 0.16258 | 0.20754 | 1 | O1 |
| O4 | 4e | 0.13786 | x+0.5 | 0.06347 | 0.10 | O1 |

| | | | | | | |
|---|---|---|---|---|---|---|
| R_{wp}=11.204, Rₚ=8.692, R_{R}=12.477, Rₑ=5.911, S=1.8954 phase 1 LaSrGa₃O₇ R_{B}=3.580, R_{F}=1.970 phase 2 LaGaO₃ R_{B}=4.611. R_{F}=2.273 | | | | | | |

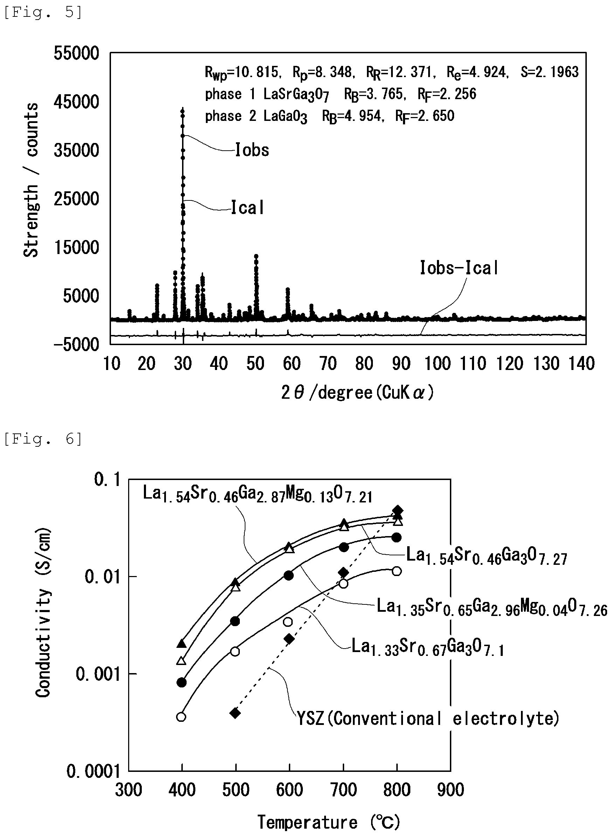

Further, Fig. 5 shows an XRD pattern of La_{1.54}Sr_{0.46}Ga₃O_{7.27} (Comparative example 2). Further, Table 4 shows the Rietveld analysis result.

Here, in Figs. 2 to 5, "I_{obs}" represents a measured value, "I_{cal}" represents a calculated value, and "I_{obs} - I_{cal}" represents a difference between a measured value and a calculated value.

**[Table 4]**

| | | | | | | | |
|---|---|---|---|---|---|---|---|
| Space group: | | | P-42₁m | | | | |
| Crystal system: | | | tetragonal | | | | |
| Chemical composition: | | | La_{1.54}Sr_{0.46}Ga₃O_{7.27}(Z=2) | | | | |
| Lattice constant: | | | a=8.04529(4) Å, c=5.27850(3) Å | | | | |

| Atom | Site | x | y | z | Occ. | B | BVS |
|---|---|---|---|---|---|---|---|
| La/Sr | 4e | 0.16451(5) | x+0.5 | 0.5101(2) | 0.721 (5)/0.179 | 0.43(2) | 2.64/2.28 |
| Ga1 | 2a | 0 | 0 | 0 | 1 | 0.88(3) | 3.33 |
| Ga2 | 4e | 0.6427(1) | x+0.5 | 0.9684(3) | 1 | Ga1 | 2.68 |
| O1 | 2c | 0 | 0.5 | 0.22303 | 1 | 1.18 | 2.25 |
| O2 | 4e | 0.6344 | x+0.5 | 0.32289 | 1 | O1 | 1.74 |
| O3 | 8f | 0.07991 | 0.16237 | 0.19999 | 1 | O1 | 2.02 |
| O4 | 4e | 0.441 | x+0.5 | 0.61602 | 0.11 | O1 | 3.01 |

| | | | | | | | |
|---|---|---|---|---|---|---|---|
| R_{wp}=1 0.815, Rₚ=8.348, R_{R}=12.371, Rₑ=4.924, S=2.1963 phase 1 LaSrGa₃O₇ R_{B}=3.765, R_{F}=2.256 phase 2 LaGaO₃ R_{B}=4.954, R_{F}=2.650 | | | | | | | |

From Figs. 2 to 5 and Tables 1 to 4, it is clarified that
(1) in a model of substituting a 2a site with Mg²⁺, the occupancy of Mg is negative,
(2) in a model of substituting a 4e site with Mg²⁺, the occupancy of Mg is positive, and
(3) in a model of substituting both a 2a site and a 4e site with Mg²⁺, the occupancy of Mg is negative.

That is, it is clarified that Mg enters a 4e site from Rietveld analysis.

### [4.2. Conductivity]

Fig. 6 shows the temperature dependence of conductivity in melilite electrolytes and a YSZ. Further, Table 5 shows the conductivities of respective electrolytes.

**[Table 5]**

| | Conductivity (S/cm) | | | | |
|---|---|---|---|---|---|
| | 400°C | 500°C | 600°C | 700°C | 800°C |
| La_{1.54}Sr_{0.46}Ga_{2.57}Mg_{0.13}O_{7.21} | 0.0021 | 0.0086 | 0.0203 | 0.0346 | 0.0431 |
| La_{1.54}Sr_{0.46}Ga₃O_{7.27} | 0.0014 | 0.0077 | 0.019 | 0.0314 | 0.0362 |
| La_{1.35}Sr_{0.65}Ga_{2.96}Mg_{0.04}O_{7.26} | 0.00082 | 0.0034 | 0.01 | 0.0195 | 0.0244 |
| La_{1.33}Sr_{0.67}Ga₃O_{7.1} | 0.00036 | 0.0017 | 0.0034 | 0.0083 | 0.011 |
| YSZ | | 0.0004 | 0.0023 | 0.011 | 0.0467 |

It is confirmed that a conductivity improves by doping Mg in a Ga site of a melilite. According to comparison between same levels of La/Sr ratios for example, the conductivities (600°C) of La_{1.35}Sr_{0.65}Ga_{2.96}Mg_{0.04}O_{7.26} and La_{1.33}Sr_{0.67}Ga₃O_{7.1} are 0.01 S/cm and 0.0034 S/cm respectively and the conductivity improves by 2.9 times through Mg doping.

Further, the conductivities (600°C) of La_{1.54}Sr_{0.46}Ga_{2.87}Mg_{0.13}O_{7.21} and La_{1.54}Sr_{0.46}Ga₃O_{7.27} are 0.0203 S/cm and 0.019 S/cm respectively and the conductivity improves through Mg doping.

In contrast, the conductivity (600°C) of the YSZ is 0.0023 S/cm.

Although embodiments according to the present invention have heretofore been explained in detail, the present invention is not limited to the embodiments and can be modified variously in the range not departing from the tenor of the present invention.

A solid electrolyte according to the present invention can be used for an electrolyte membrane for a fuel cell, an oxygen sensor, an oxidation catalyst (an exhaust gas purifying catalyst, a combustion catalyst, or a partial oxidation catalyst), or the like.

## Claims

1. A solid electrolyte having a melilite structure and a composition represented by the following expression (1);
La_{2-y}M_{y}X_{3-z}Mg_{z}O_{7+α} ··· (1),
where
M represents an alkaline earth metal element other than Mg, X represents a trivalent metal element,
0 < y < 2, 0 < z < 3, and
α represents a value retaining electrical neutrality.

2. The solid electrolyte according to Claim 1, wherein the X is Ga and/or Al.

3. The solid electrolyte according to Claim 1 or 2, wherein the solid electrolyte further satisfies the expressions 1.9 ≤ (2-y)/y ≤ 4.0 and 0 < z ≤ 0.20.

## Patentansprüche

1. Festelektrolyt mit einer Melilith-Struktur und einer durch den folgenden Ausdruck (1) dargestellten Zusammensetzung;
La_{2-y}M_{y}X_{3-z}Mg_{z}O_{7+α} ·· ·(1),
in dem
M ein anderes Erdalkalimetall als Mg darstellt,
X ein trivalentes Metall darstellt,
0 <y < 2, 0 < z <3 und
α einen Wert darstellt, der elektrische Neutralität beibehält.

2. Festelektrolyt nach Anspruch 1, bei dem
das X Ga und/oder Al ist.

3. Festelektrolyt nach Anspruch 1 oder 2, bei dem
der Festelektrolyt weiter die Ausrücke 1,9 ≤ (2-y) / y ≤ 4,0 und 0 < z ≤ 0,20 erfüllt.

## Revendications

1. Électrolyte solide présentant une structure de mélilite et une composition représentée par l'expression suivante (1) ;
La_{2-y}M_{y}X_{3-z}Mg_{z}O_{7+α} ... (1),
où
M représente un élément métallique alcalino-terreux autre que Mg,
X représente un élément métallique trivalent,
0 < y < 2, 0 < z < 3, et
a représente une valeur requise pour conserver une neutralité électrique.

2. Électrolyte solide selon la revendication 1, dans lequel X est Ga et/ou Al.

3. Électrolyte solide selon la revendication 1 ou 2,
où l'électrolyte solide satisfait en outre les expressions 1,9 ≤ (2-y) / y ≤ 4,0 et 0 < z ≤ 0,20.
